# EUROPÄISCHE PATENTSCHRIFT

(11) **EP 2 184 113 B1**
(45) Veröffentlichungstag und Bekanntmachung des Hinweises auf die Patenterteilung: **14.03.2012**
(21) Anmeldenummer: 09172496.3
(22) Anmeldetag: 08.10.2009
(51) Int. Cl.: B05C 17/01

(54) **Auspressvorrichtung**
Dispensing apparatus
Dispositif de distribution

(30) Priorität: 07.11.2008 DE 102008043538
(43) Veröffentlichungstag der Anmeldung: 12.05.2010
(73) Patentinhaber: HILTI Aktiengesellschaft, 9494 Schaan (LI)
(72) Erfinder: Hefele, Christian, 87739, Breitenbrunn (DE); Lederle, Hans Peter, 87471, Durchach (DE); Heiberger, Franz, 9507, Stettfurt (CH)

(56) Entgegenhaltungen:
- WO-A1-2008/017330
- CH-A- 248 156
- DE-U1- 20 309 471
- FR-A- 918 076
- JP-A- 2001 317 214
- US-A- 2 093 387
- US-A- 2 240 046
- US-A- 4 318 499

## Beschreibung

Die Erfindung betrifft eine Auspressvorrichtung für Massen enthaltende Gebinde mit zumindest einer Kolbenstange, die entlang ihrer Längserstreckung eine Profilierung aufweist, und mit einer Antriebseinheit für die zumindest eine Kolbenstange mit einem mit der Profilierung der zumindest einen Kolbenstange kämmenden Antriebsmittel.

Eine derartige Auspressvorrichtung dient dem Ausbringen von in Gebinden, wie z. B. in Folienbeutel oder Kartuschen, verpackten Massen an einem Applikationsort. Diese Auspressvorrichtung ist zum Ausbringen von verschiedenen Arten von Massen, wie z. B. Mörtel- oder Dichtmassen geeignet. Durch Betätigung der manuellen oder elektrischen Antriebseinrichtung wird das Antriebsmittel aktiviert und die zumindest eine Kolbenstange über ein vorbestimmtes Mass vorgeschoben, wobei ein an der Kolbenstange angeordneter Druckteller auf das Gebinde einwirkt und eine entsprechende Menge der darin vorhandenen Masse durch eine Ausgabeöffnung der Auspressvorrichtung ausgebracht wird. Zum Austauschen eines ausgepressten Gebindes muss die Kolbenstange zurückgezogen werden, damit das in die Auspressvorrichtung eingelegte Gebinde aus diesem entnommen und durch ein anderes Gebinde ersetzt werden kann.

Aus der DE 22 27 930 A1 ist eine Auspressvorrichtung mit einer Kolbenstange, die entlang ihrer Längserstreckung eine Zahnprofilierung aufweist, und mit einer Antriebseinheit für die zumindest eine Kolbenstange bekannt. Die Antriebseinheit umfasst einen Motor und ein Getriebe als Antrieb sowie ein von dem Antrieb angetriebenes, mit der Zahnprofilierung der zumindest einen Kolbenstange kämmendes Zahnrad als Antriebsmittel. Mittels Polumschaltung des Motors wird die zuvor von der Antriebseinheit vorgeschobene Kolbenstange in ihre Ausgangsstellung zurückgefahren, in der das eingelegte Gebinde entnehmbar und ein neues Gebinde in die Auspressvorrichtung einlegbar ist. Eine derartige Auspressvorrichtung wird auch als Zahnstangendispenser bezeichnet und gewährleistet einen kontinuierlichen Vorschub der Kolbenstange.

Nachteilig an der bekannten Lösung ist, dass eine Kolbenstange mit Zahnprofilierung aufwändig in der Herstellung und verschmutzungsanfällig ist, da anfallende Verunreinigungen wie Staub, Masse oder dergleichen sich an der Zahnprofilierung ablagern können und somit die Kämmung des Zahnrades als Antriebsmittel behindern.

Aufgabe der Erfindung ist es, eine gattungsgemässe Auspressvorrichtung zu schaffen, welche die vorgenannten Nachteile nicht aufweist, wobei insbesondere die zumindest eine Kolbenstange kostengünstig zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung ist die Profilierung der zumindest einen Kolbenstange von mehreren im gleichmässigen Abstand zueinander beabstandeten, die Kolbenstange durchsetzenden Durchgangslöchern gebildet, in welche Eingriffsmittel des Antriebsmittels für den Vorschub der zumindest einen Kolbenstange eingreifen.

Etwaige sich in den Durchgangslöchern ablagernde Verunreinigungen werden beim Kämmen des Antriebsmittels mit der zumindest einen Kolbenstange durch die durchgängigen Durchgangslöcher hindurch ausgeworfen. Die Eingriffsmittel des Antriebsmittels der Antriebseinrichtung greifen an den in Vorschubrichtung liegenden Flanken der Durchgangslöcher an und gewährleisten einen kontinuierlichen Vorschub der zumindest einen Kolbenstange. Dabei ist die zumindest eine Kolbenstange von der Antriebseinrichtung sowohl in als auch entgegen der Vorschubrichtung versetzbar.

Die zumindest eine gelochte Kolbenstange ist einfach beispielsweise durch Feinschneiden hergestellt, womit die Durchgangslöcher hochpräzis sowie gratlos an der zumindest einen Kolbenstange ausgebildet werden können.

Vorzugsweise ist das Antriebsmittel zumindest ein Zahnrad, wobei die Zähne des zumindest einen Zahnrades die Eingriffsmittel sind. Das zumindest eine Zahnrad kämmt für den Vorschub der zumindest einen Kolbenstange mit den Durchgangslöchern in der zumindest einen Kolbenstange, womit ein kontinuierlicher Vorschub der zumindest einen Kolbenstange während dem gesamten Auspressvorgang gewährleistet ist. Zudem werden durch die in die Durchgangslöcher eindringenden Zähne sich in den Durchgangslöchern befindliche Verunreinigungen einfach ausgeworfen.

Alternativ umfasst das Antriebsmittel beispielsweise einen Hebelmechanismus mit einem Hebel, bei dessen Betätigung ein freies Ende des Hebels als Eingreifmittel für den Vorschub der zumindest einen Kolbenstange in die Durchgangslöcher eindringt beziehungsweise mit diesen kämmt.

Bevorzugt weisen die Zähne des zumindest einen Zahnrades eine Evolventenkontur auf, welche ein vorteilhaftes Kämmen mit der zumindest einen Kolbenstange und somit einen vorteilhaften Vorschub derselben über den gesamten Auspressvorgang gewährleisten.

Vorzugsweise sind die Durchgangslöcher im Öffnungsquerschnitt rechteckig und besonders vorteilhaft annähernd quadratisch, womit ein symmetrischer Aufbau über die entsprechende Längserstreckung der zumindest einen gelochten Kolbenstange gegeben ist und ein Härteverzug entlang dieser verhindert ist.

Bevorzugt ist zumindest die in Vorschubrichtung der zumindest einen Kolbenstange abgewandte Seitenkante eines jeden Durchgangslochs, welche dem kämmenden Antriebsmittel zugewandt ist, mit einer Abkantung versehen. Mit der Abkantung, welche beispielsweise als Fase oder als Abrundung ausgebildet ist, wird eine einwandfreie Kämmung des Antriebsmittels mit der zumindest einen Kolbenstange, insbesondere wenn das Antriebsmittel ein mit der zumindest einen Kolbenstange kämmendes Zahnrad umfasst, gewährleistet. Die Abkantung verfestigt zudem die zumindest eine gelochte Kolbenstange. Zudem lässt sich die Zahnflankenbelastung in vorteilhafter Weise beherrschen. Durch die Abkantung wird jedes Durchgangsloch der zumindest einen gelochten Kolbenstange auf der dem Antriebsmittel zugewandten Seite der zumindest einen Kolbenstange zumindest entgegen der Vorschubrichtung in Bezug auf dessen Öffnungsquerschnitt bereichsweise aufgeweitet, was ein einfaches Kämmen des Antriebsmittels mit der zumindest einen gelochten Kolbenstange ermöglicht.

Vorzugsweise sind zumindest zwei einander gegenüberliegende Seitenkanten eines jeden Durchgangslochs, welche in Längserstreckung beziehungsweise in Vorschubrichtung der zumindest einen Kolbenstange einander gegenüberliegenden und dem kämmenden Antriebsmittel zugewandt sind, jeweils mit einer Abkantung versehen. Mit den einander gegenüberliegenden Abkantungen, welche beispielsweise als Fase oder als Abrundung ausgebildet sind, wird eine einwandfreie Kämmung des Antriebsmittels mit der zumindest einen Kolbenstange gewährleistet. Dies wird insbesondere gewährleistet, wenn das Antriebsmittel ein mit der zumindest einen Kolbenstange kämmendes Zahnrad umfasst. Die Abkantungen verfestigen zudem die zumindest eine gelochte Kolbenstange. Zudem lassen sich die Zahnflankenbelastungen in noch vorteilhafterer Weise beherrschen. Durch die einander gegenüberliegenden Abkantungen wird jedes Durchgangsloch der zumindest einen gelochten Kolbenstange auf der dem Antriebsmittel zugewandten Seite der zumindest einen Kolbenstange in sowie entgegen der Vorschubrichtung in Bezug auf dessen Öffnungsquerschnitt bereichsweise aufgeweitet, was ein noch einfaches Kämmen des Antriebsmittels mit der zumindest einen gelochten Kolbenstange ermöglicht.

Die Erfindung wird nachstehend anhand eines Ausführungsbeispiels näher erläutert. Es zeigen:
- Fig. 1: Eine Auspressvorrichtung im Grundriss; und
- Fig. 2: ein Abschnitt einer Kolbenstange in perspektivischer Darstellung.

Grundsätzlich sind in den Figuren gleiche Teile mit den gleichen Bezugszeichen versehen.

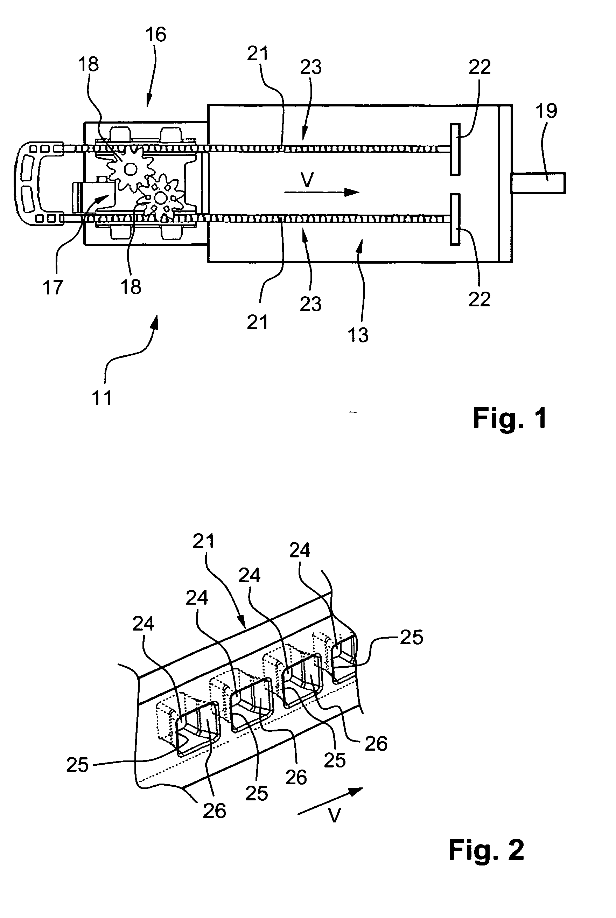

Die in den Figuren 1 und 2 dargestellte Auspressvorrichtung 11 dient dem Auspressen einer Masse aus einem Gebinde, das in einem Aufnahmeraum 13 der Auspressvorrichtung 11 auswechselbar angeordnet ist. Die Auspressvorrichtung 11 weist zwei Kolbenstangen 21 auf, die an ihren freien Enden jeweils einen Druckteller 22 zum Auspressen der im Gebinde befindlichen Masse aufweisen. Entlang der Längserstreckung der Kolbenstangen 21 weisen diese jeweils eine Profilierung 17 auf, die von mehreren im gleichmässigen Abstand zueinander beabstandeten, die die Kolbenstange 21 durchsetzenden Durchgangslöchern 24 gebildet ist.

Weiter weist die Auspressvorrichtung 11 eine Antriebseinheit 16 für die Kolbenstangen 21 auf, die beispielsweise einen Elektromotor als Antrieb, ein Übersetzungsgetriebe und zwei, von dem Antrieb angetriebene, miteinander und mit den Durchgangslöchern 24 der Kolbenstangen 21 kämmende Zahnräder 18 als Antriebsmittel 17 umfasst. Bei Betätigung des Antriebs werden die Zahnräder 18 in Rotation versetzt, welche mit ihren Zähnen als Eingreifmittel gleichzeitig mit den Durchgangslöchern der gelochten Kolbenstangen 21 kämmen, so dass beide Kolbenstangen 21 von den Zahnrädern 18 zum Auspressen der Masse vorgeschoben werden. Die dabei aus dem Gebinde ausgebrachte Masse tritt aus der Ausgabeöffnung 19 der Auspressvorrichtung 11 aus.

Die Zähne der beiden Zahnräder 18 weisen jeweils eine Evolventenkontur auf. Beispielsweise über eine Polumkehr des Elektromotors beziehungsweise durch Umschaltung des Antriebs werden die Zahnräder 18 entgegen der Rotationsrichtung für den Vorschub der Kolbenstangen 21 rotiert, so dass die Kolbenstangen 21 wieder in eine Ausgangsstellung für einen Wechsel des Gebindes zurückfahrbar sind.

Alternativ umfasst der Antrieb einen beispielsweise manuell betätigbaren Hebelmechanismus, der gleichzeitig das mit zumindest einer der gelochten Kolbenstangen kämmende, Eingriffsmittel umfassende Antriebsmittel 17 für den Vorschub derselben aufweist.

Wie in der Figur 2 ersichtlich, sind die Durchgangslöcher 24 im Öffnungsquerschnitt rechteckig. Die Seitenkanten 25 und 26 eines jeden Durchgangslochs 24, welche in Längserstreckung beziehungsweise in Vorschubrichtung V der Kolbenstangen 21 einander gegenüberliegen und dem kämmenden Antriebsmittel 17 zugewandt sind, sind jeweils mit einer Abkantung versehen. Somit sind die Durchgangslöcher 24 in Längserstreckung der Kolbenstangen 21 gegenüber dem annähernd quadratischen Öffnungsquerschnitt in Richtung der Längserstreckung der Kolbenstangen 21, jeweils auf der dem Antriebsmittel 17 zugewandten Seite der Kolbenstangen 21 aufgeweitet.

## Patentansprüche

1. Auspressvorrichtung für Massen enthaltende Gebinde mit zumindest einer Kolbenstange (21), die entlang ihrer Längserstreckung eine Profilierung (23) aufweist, und
mit einer Antriebseinheit (16) für die zumindest eine Kolbenstange (21) mit einem mit der Profilierung (23) der zumindest einen Kolbenstange (21) kämmenden Antriebsmittel (17),
wobei die Antriebseinheit (16) dafür eingerichtet ist, die gesamte Kolbenstange (21) entweder in genau einer Vorschubrichtung (V) oder entgegen der genau einen Vorschubrichtung (V) zu versetzen,
**dadurch gekennzeichnet, dass**
die Profilierung (23) der zumindest einen Kolbenstange (21) von mehreren im gleichmässigen Abstand zueinander beabstandeten, die Kolbenstange (21) durchsetzenden Durchgangslöchern (24) gebildet ist, in welche Eingriffsmittel des Antriebsmittels (17) für den Vorschub der zumindest einen Kolbenstange (21) eingreifen.

2. Auspressvorrichtung nach Anspruch 1, **dadurch gekennzeichnet, dass** das Antriebsmittel (17) zumindest ein Zahnrad (18) ist, wobei die Zähne des zumindest einen Zahnrades (18) die Eingriffsmittel sind.

3. Auspressvorrichtung nach Anspruch 2, **dadurch gekennzeichnet, dass** die Zähne des zumindest einen Zahnrades (18) eine Evolventenkontur aufweisen.

4. Auspressvorrichtung nach einem der Ansprüche 1 bis 3, **dadurch gekennzeichnet, dass** die Durchgangslöcher (24) im Öffnungsquerschnitt rechteckig sind.

5. Auspressvorrichtung nach einem der Ansprüche 1 bis 3, **dadurch gekennzeichnet, dass** zumindest die in Vorschubrichtung (V) der zumindest einen Kolbenstange (21) abgewandte Seitenkante (25) eines jeden Durchgangslochs (24), welche dem kämmenden Antriebsmittel (17) zugewandt ist, mit einer Abkantung versehen ist.

6. Auspressvorrichtung nach einem der Ansprüche 1 bis 3, **dadurch gekennzeichnet, dass** zumindest zwei einander gegenüberliegenden Seitenkanten (25, 26) eines jeden Durchgangslochs (24), welche in Längserstreckung der zumindest einen Kolbenstange (21) einander gegenüberliegenden und dem kämmenden Antriebsmittel (17) zugewandt sind, jeweils mit einer Abkantung versehen sind.

## Claims

1. A press-out dispensing device for containers holding substances, said device comprising at least one piston rod (21) with profiling (23) along its length, and comprising a drive unit (16) for the at least one piston rod (21) with driving means (17) meshing with the profiling (23) of said at least one piston rod (21), the drive unit (16) being set up for the purpose of displacing the entire piston rod (21) either precisely in an advance direction (V) or precisely counter to said advance direction (V),
**characterized in that**
the profiling (23) of the at least one piston rod (21) is formed by a number of through holes (24) which are spaced apart from one another at regular intervals and pass through the piston rod (21), and **in that** engaging means of the driving means (17) engage in said through holes (24) for advancing the at least one piston rod (21).

2. A dispensing device according to Claim 1, **characterized in that** the driving means (17) consist of at least one gear wheel (18), the teeth of the at least one gear wheel (18) forming the engaging means.

3. A dispensing device according to Claim 2, **characterized in that** the teeth of the at least one gear wheel (18) have an involute profile.

4. A dispensing device according to one of Claims 1 to 3, **characterized in that** the openings of the through holes (24) are rectangular in cross-section.

5. A dispensing device according to one of Claims 1 to 3, **characterized in that** at least the lateral edge (25) of each through hole (24), which [lateral edge] faces away from the advance direction (V) of the at least one piston rod (21) and faces the meshing driving means (17), is provided with a bevelled edge.

6. A dispensing device according to one of Claims 1 to 3, **characterized in that** at least two opposite lateral edges (25, 26) of each through hole (24), which lie opposite one another in longitudinal direction of the at least one piston rod (21) and face the meshing driving means (17), are in each case provided with a bevelled edge.

## Revendications

1. Dispositif de distribution pour des récipients contenant des masses avec au moins une tige de piston (21) présentant un profilage (23) le long de son étendue longitudinale, et
une unité d'entraînement (16) pour au moins une tige de piston (21) avec un moyen d'entraînement (17) s'engrenant avec le profilage (23) de ladite moins une tige de piston (21),
dans lequel l'unité d'entraînement (16) est aménagée afin de décaler la tige de piston entière (21) dans un sens d'avance précis (V) ou dans un sens opposé au sens d'avance précis (V),
**caractérisé en ce que**
le profilage (23) d'au moins une tige de piston (21) est constitué de plusieurs trous de passage (24) traversant la tige de piston (21), espacés régulièrement les uns des autres, dans lesquels s'engagent des moyens d'engagement du moyen d'entraînement (17) pour l'avance d'au moins une tige de piston (21).

2. Dispositif de distribution selon la revendication 1, **caractérisé en ce que** le moyen d'entraînement (17) est au moins une roue dentée (18), dans lequel les dents de ladite au moins une roue dentée (18) sont les moyens d'engagement.

3. Dispositif de distribution selon la revendication 2, **caractérisé en ce que** les dents de ladite au moins une roue dentée (18) présentent un contour en développante.

4. Dispositif de distribution selon l'une quelconque des revendications 1 à 3, **caractérisé en ce que** la section d'ouverture des trous de passage (24) est rectangulaire.

5. Dispositif de distribution selon l'une quelconque des revendications 1 à 3, **caractérisé en ce qu'**au moins l'arête latérale (25) éloignée dans le sens d'avance (V) d'au moins une tige de piston (21) de chaque trou de passage (24) et tournée vers le moyen d'entraînement (17) s'engrenant, est pourvue d'un biseau.

6. Dispositif de distribution selon l'une quelconque des revendications 1 à 3, **caractérisé en ce qu'**au moins deux arêtes latérales (25, 26) opposées de chaque trou de passage (24) qui sont opposées l'une à l'autre dans l'étendue longitudinale d'au moins une tige de piston (21) et tournées vers le moyen d'entraînement (17) s'engrenant, sont pourvues respectivement d'un biseau.
